# EUROPÄISCHE PATENTANMELDUNG

(11) **EP 1 253 534 A1**
(43) Veröffentlichungstag der Anmeldung: **30.10.2002**
(21) Anmeldenummer: 02007002.5
(22) Anmeldetag: 27.03.2002
(51) Int. Cl.: G06F 17/60

(54) **Elektronisches Verfahren und zentrale elektronische Einrichtung zur Wirtschaftsförderung und/oder Firmengründung**

(30) Priorität: 26.04.2001 DE 10120554
(71) Anmelder: Wolfsburg AG, 38442 Wolfsburg (DE)
(72) Erfinder: Dierkes, Klaus, 38446 Wolfsburg (DE); Umbach, Stefan, 38104 Braunschweig (DE); Schmidt, Andreas, 33106 Paderborn (DE); Opaterny, Heiko, 38551 Ribbesbüttel (DE); Schweihofer, Thomas, 29399 Wahrenholz (DE); Steines, Oswald, 38440 Wolfsburg (DE); Hartz, Peter, Dr., 38440 Wolfsburg (DE); von Perfall, Eckhard, 20146 Hamburg (DE); Marg, Katharina, 22605 Hamburg (DE); Parcia, Dirk, 20255 Hamburg (DE); Schmidt, Peter, 85630 Grasbrunn (DE); Carls, Peter-Rainer, 38106 Braunschweig (DE); Burbank, Ina, 38533 Vordorf (DE); Dauer, Wiebke, 39118 Magdeburg (DE); Hobohm, Kathrin, 38110 Braunschweig (DE); Henke, Jens, 38446 Wolfsburg (DE); Strauss, Marten, 38446 Wolfsburg (DE); Biethahn, Nils, 38106 Braunschweig (DE)
(74) Vertreter: Geske, Kerstin

(57) **Zusammenfassung**

Die Erfindung betrifft ein elektronisches Verfahren zur Wirtschaftsförderung und/oder Firmengründung in definierten territorialen Gebieten mittels einer zentralen Einrichtung (1), die über ein Datenkommunikationsnetz (3) mit dezentralen Terminaleinrichtungen (2a,2b) kommuniziert und eine zentrale Einrichtung (1) in einem Datenkommunikationsnetzwerk (3), von welcher Informationen und/oder Dienste zur Wirtschaftsförderung und/oder Firmengründung über dezentrale Terminaleinrichtungen (2a,2b) abrufbar sind.

Gemäß der Erfindung ist es vorgesehen, das Datenkommunikationsnetzwerk (3), in dem zu der zentralen Einrichtung (1) eine Kommunikationsverbindung von dezentralen Terminaleinrichtungen (2a,2b) aufgebaut werden kann, zur Wirtschaftsförderung und/oder Unterstützung bei einer Firmengründung zu nutzen, indem von den dezentralen Terminaleinrichtungen (2a,2b) prozeßorientiert Informationen und/oder Dienste von der zentralen Einrichtung abgerufen werden können.

## Beschreibung

Die Erfindung betrifft ein elektronisches Verfahren zur Wirtschaftsförderung und/oder Firmengründung in definierten territorialen Gebieten mittels einer zentralen elektronischen Einrichtung, die über ein Datenkommunikationsnetzwerk mit dezentralen elektronischen Terminaleinrichtungen kommuniziert und eine zentrale elektronische Einrichtung in einem Datenkommunikationsnetzwerk, von der Informationen und/oder Dienste zur Wirtschaftsförderung und/oder Firmengründung über dezentrale Terminaleinrichtungen elektronisch abrufbar sind.

Es ist bekannt, über dezentrale Terminaleinrichtungen (Clients) über ein Datenkommunikationsnetzwerk von einer zentralen Einrichtung (Servereinrichtung) prozeßorientiert Informationen des täglichen Lebens abzurufen. So konnte man am 05.April 2001 unter **www.baynet.de** mit Hilfe einer Menüstruktur aus Haupt- und Unterthemenkreisen Informationen zu bestimmten Lebenslagen, wie Hochzeit, Informationen des Bürgerservice und Unternehmensverzeichnisse erhalten. Die Seite bietet auch einen virtuellen Markplatz an, auf dem Firmen ihre Ware anpreisen und der Kunde bei der Firma die Waren direkt bestellen kann.

Die Aufgabe der Erfindung ist es, ein elektronisches Verfahren und eine zentrale elektronische Einrichtung in einem Kommunikationsnetz zu schaffen, mit denen sowohl Gewerbetreibende als auch Gewerbegründende durch Informations- und Dienstleistungsbündelung elektronisch unterstützt werden.

Die Aufgabe wird durch die Merkmale der Patentansprüche 1, 18 und 34 gelöst. Vorteilhafte Aus- und Weiterbildungen sind in den Unteransprüchen dargestellt.

Gemäß der Erfindung ist es vorgesehen, ein Datenkommunikationsnetzwerk, in dem zu einer zentralen elektronischen Einrichtung, die als logische Zentrale zu verstehen ist, in der verschiedene zentrale elektronische Einrichtungen zusammengefaßt sein können, eine Kommunikationsverbindung von dezentralen elektronischen Terminaleinrichtungen aufgebaut werden kann, zur Wirtschaftsförderung und/oder Unterstützung einer Firmengründung in einem definierten territorialen Gebiet zu nutzen, indem von den dezentralen Terminaleinrichtungen prozeßorientiert Informationen und/oder Dienste von der zentralen Einrichtung elektronisch abgerufen werden können.

Nach einer vorteilhaften Weiterbildung der Erfindung erfolgt der elektronische Abruf der Dienste und/oder der prozeßorientierten Informationen mittels einer von der zentralen elektronischen Einrichtung organisierten und auf einer Anzeigeeinrichtung einer dezentralen elektronisch Terminaleinrichtung automatisch darstellbaren Menüauswahl durch Vorgabe in einem Suchschema und/oder durch Vorgabe einzelner Dienste und/oder einzelner Themengebiete und/oder durch Vorgabe einzelner territorialer Gebiete. So ist denkbar, dass unter einem Themengebiet "Firmengründung" zu einer bestimmten Region verschiedene Unterthemen, wie "Grundstücke", freie Büroräume", gesetzliche Grundlagen", "Unterstützung", usw. in der Menüstruktur elektronisch aufrufbar sind. Unter dem Menüpunkt "Grundstücke" können, dann weitere Funktionen, wie "Kauf des Grundstücks", "Lage und Größe des Grundstücks", oder als Dienst "Terminvereinbarung" elektronisch angeboten werden. Für eine andere Region können unter dem gleichen Themengebiet andere und/oder zusätzliche Informationen und Dienste elektronisch abrufbar sein.

Eine andere Möglichkeit besteht darin unter einer Hauptgruppe "Firmengründung" eine elektronische Funktion "territoriale Gebiete" vorzusehen, die Informationen bietet, wo auf welchem Fachgebiet eine Firmengründung interessant sein kann.

Sollen Informationen eines bestimmten territorialen Gebietes von der zentralen Einrichtung elektronisch abgefragt werden, erfolgt erfindungsgemäß der elektronische Aufruf der territorialen Gebiete über die dezentralen Terminaleinrichtungen vorzugsweise über eingebbare Gebietebezeichnungen und/oder eingebbare Gebietecodes und/oder ein von der zentralen Einrichtung elektronisch abrufbares und auf der Anzeigeeinrichtung der dezentralen Terminaleinrichtungen automatisch darstellbares geographisches Gebiet, insbesondere über eine Landkarte oder einen Teil einer Landkarte und eine Anwahl des gewünschten Gebietes auf dem dargestellten geographischen Gebiet, wobei zur genaueren Auswahl des Gebietes eine elektronische Zoomfunktion (Maßstabsänderungsfunktion) vorgesehen und/oder das geographische Gebiet auch dreidimensional dargestellt sein kann.

Eine andere erfindungsgemäße Möglichkeit zur elektronischen Auswahl der territorialen Gebiete besteht darin, dass eine automatische Positionsbestimmung der dezentralen Terminaleinrichtung vorgesehen ist oder das territoriale Gebiet über eine Standorteingabe automatisch auswählbar ist, wobei das territoriale Gebiet als vorzugsweise in seiner Größe über die dezentrale Terminaleinrichtung wählbarer oder festlegbarer Umkreis von der zentralen Einrichtung automatisch definiert wird.

Nach der Auswahl eines gewünschten territorialen Gebietes wird an die dezentrale Terminaleinrichtung von der zentralen Einrichtung für das gewünschte territoriale Gebiet vorhandene Informationen prozeßorientiert automatisch gesendet und strukturiert in Haupt- und/oder Unterthemenkreisen auf der elektronischen Anzeigeeinrichtung der dezentralen Terminaleinrichtung dargestellt, wobei die Haupt- und/oder Unterthemenkreise Informationen und/oder Dienste zur Wirtschaftsförderung und/oder Firmengründung beinhalten.

Nach der Erfindung ist weiterhin vorgesehen, dass zumindest ein Teil der Informationen und/oder Dienste personifiziert, das heißt nach bestimmten Kriterien des Benutzers zusammengestellt, in der zentralen Einrichtung elektronisch organisierbar ist und über die dezentralen Terminaleinrichtungen elektronisch abrufbar ist. Nach einer vorteilhaften Ausbildung ist nach dem Kommunikationsaufbau zwischen der zentralen Einrichtung und einer dezentralen Terminaleinrichtung auf der elektronischen Anzeigeeinrichtung der Terminaleinrichtung innerhalb eines von der zentralen Einrichtung abgerufenen Menüpunktes ein Auswahlelement dargestellt, über welches ein personifizierter Informations- und/oder Diensteabruf vom Benutzer programmierbar bzw. zusammenstellbar und in der zentralen Einrichtung elektronisch abspeicherbar ist. In Abhängigkeit der programmierten Informations- und/oder Diensteanforderung können bei wiederholter elektronischen Anwahl des personifizierten Informations- und/oder Diensteabrufs Informationen und/oder Dienste des personifizierten Abrufs auf der Anzeigeeinrichtung einer dezentralen Terminaleinrichtung automatisch dargestellt werden.

Weiterhin kann vorgesehen sein, dass der personifizierte Informations- und/oder Diensteabruf über eine personengebundene Berechtigungsprüfung erfolgt. Diese Berechtigung kann als eine digitale Unterschrift, als ein Paßwort oder als eine optische Benutzererkennung ausgeführt sein. Dazu wird beispielsweise vor oder während der Programmierung des personifizierten Informations- und/oder Dienstabrufs der zentralen Einrichtung über eine der mit ihr in Kommunikationsverbindung stehenden dezentralen elektronischenTerminaleinrichtungen die Berechtigung mitgeteilt, über welche dann die Informationen und/oder Dienste des personifizierten Abrufs elektronisch aufrufbar sind. Nach einer Ausbildung der Erfindung kann die Berechtigung von der zentralen elektronischen Einrichtung innerhalb der Menüstruktur des personifizierten Abrufs auch von der dezentralen elektronischen Terminaleinrichtung auch automatisch angefordert werden.

Nach einer vorteilhaften Ausbildung der Erfindung wird nach einem Kommunikationsverbindungsaufbau zwischen der zentralen elektronischen Einrichtung und einer dezentralen elektronischen Terminaleinrichtung innerhalb der angezeigten Menüstruktur zumindest eine automatische Mitteilung über eine Änderung des Informations- und/oder Diensteabrufs auf der Anzeigeeinrichtung wiedergegeben, d. h. es wird darüber automatisch informiert, dass der zentralen elektronischen Einrichtung Informations- und/oder Diensteänderungen vorliegen, die den gespeicherten personifizierten Informations- und/oder Diensteabruf betreffen.

Eine weitere Ausbildung sieht vor, dass der zentralen Einrichtung, vorzugsweise innerhalb des Menüs des personifizierten Informations- und/oder Diensteabrufs, von der dezentralen Terminaleinrichtung eine elektronische Postadresse elektronisch mitteilbar ist, wobei dabei wiederum vorgesehen sein kann, dass innerhalb der angezeigten Menüstruktur ein elektronischer Abruf der Postadresse durch die zentrale Einrichtung erfolgt. Vorzugsweise wird der mitgeteilten elektronischen Postadresse bei einer Informations- und/oder Diensteänderung des personifizierten Informations- und/oder Diensteabrufs und/oder in definierten zeitlichen Abständen eine Mitteilung über die Änderung und/oder die Änderung selbst automatisch mitgeteilt. Ob die Änderung selbst oder nur eine Mitteilung über die Änderung automatisch gesendet wird, hängt von der Art und Weise der Änderung und/oder der sich ändernden Information oder des sich ändernden Dienstes ab.

Nach einer Ausbildung der Erfindung ist einer der über die zentrale elektronischen Einrichtung angebotene Dienste zur Wirtschaftsförderung ein prozeßorientiertes Angebot von Informationen über Ansprechpartner zu definierten Themenkreisen, insbesondere zur Firmengründung, das in der zentralen Einrichtung elektronisch abgespeichert und elektronisch aktualisierbar ist und über die dezentralen Terminaleinrichtungen elektronisch abrufbar ist. Eine Kommunikation der Benutzer einer dezentralen Terminaleinrichtung mit einem oder mehreren Ansprechpartnern soll vorzugsweise über die zentrale Einrichtung automatisiert herstellbar sein.

Ein weiterer Dienst zur Wirtschaftsförderung, der von der zentralen Einrichtung automatisiert organisierbar ist, ist ein virtueller Marktplatz verschiedener Unternehmen, insbesondere eines territorialen Gebietes, über den von den zentralen Terminaleinrichtungen Waren und/oder Dienstleistungen der angeschlossenen Unternehmen innerhalb einer auf den dezentralen Terminaleinrichtungen anzeigbaren Menüstruktur elektronisch bestellbar sind. Der Benutzer einer Terminaleinrichtung muß also nicht eine Kommunikationsverbindung zu jedem der einzelnen Unternehmen bzw. zum Server des jeweiligen Unternehmens elektronisch herstellen, sondern es wird von der dezentralen Terminaleinrichtung eine Kommunikationsverbindung zur zentralen Einrichtung automatisiert hergestellt, über die der Benutzer Waren und/oder Dienste der angeschlossenen Unternehmen elektronisch ordern kann. Dabei ist denkbar, dass dem Kunden eine Rechnung, beispielsweise Kreditkartenrechnung über die Bestellung von Waren mehrerer Unternehmen von der zentralen Einrichtung ausgestellt bekommt. Die Disposition der bestellten Waren erfolgt nach einer vorteilhaften Ausbildung der Erfindung automatisch über die zentrale elektronische Einrichtung. Hier kann vorgesehen sein, dass die Auslieferung direkt an den Kunden oder eine zentrale Auslieferungsstelle erfolgt. Der angebotene Dienst hat den Vorteil, dass insbesondere kleinere Unternehmen die Möglichkeit erhalten, ihre Waren und/oder Dienstleistungen nicht einzeln über die zentrale elektronische Einrichtung, sondern im Verbund elektronisch anzubieten und den Verkauf abwickeln zu können. Der Kunde wiederum erhält die Möglichkeit, die gewünschten Waren und/oder Dienstleistungen verschiedener Unternehmen über eine auf der dezentralen Terminaleinrichtung angezeigte Menüstruktur gesammelt elektronisch zu bestellen und/oder zu bezahlen.

Eine weitere Ausbildung der Erfindung sieht vor, dass über den personifizierten elektronischen Informations- und/oder Diensteabruf ein personifizierter virtueller Marktplatz automatisert zusammenstellbar und die Daten des personifizierten Marktplatzes in der zentralen Einrichtung elektronisch abspeicherbar ist, der die über die zentrale Einrichtung elektronisch bestellbare Waren und/oder Dienste der in diesem Informations- und/oder Diensteabrufs enthaltenden Unternehmen enthält und über den diese Waren elektronisch orderbar sind. Dabei muß der personifizierte Marktplatz nicht auf ein territoriales Gebiet beschränkt sein.

Die Erfindung betrifft weiterhin ein Computerprogrammprodukt, das direkt in eine interne Speichereinrichtung, die auch aus mehreren Speichermodulen bestehen kann, der zentralen elektronischen Einrichtung ladbar ist und Softwarecodeabschnitte umfaßt, mit denen die Verfahrensschritte gemäß dem erfindungsgemäßen Verfahren elektronisch ausgeführt werden und/oder elektronisch ausführbar sind, wenn das Computerprogrammprodukt in der zentralen elektronischen Einrichtung ausgeführt wird bzw. über eine mit der zentralen Einrichtung in Kommunikationsverbindung stehende dezentrale elektronische Terminaleinrichtung elektronisch angesprochen wird.

Nachfolgend wird die Erfindung anhand eines Ausführungsbeispiels näher beschrieben. Die zugehörigen Zeichnungen zeigen:
- Fig. 1: ein Blockschaltbild eines Kommunikationsnetzwerkes mit einer zentralen elektronischen Einrichtung und mehreren dezentralen elektronischen Einrichtungen,
- Fig. 2: eine Variante eines Einstiegmenüs auf der Anzeigeeinrichtung einer dezentralen Terminaleinrichtung,
- Fig. 3: ein Anzeigebild zur Auswahl eines territorialen Gebietes auf der elektronischen Anzeigeeinrichtung einer dezentralen Terminaleinrichtung,
- Fig. 4: ein gebietsbezogenes Hauptmenü,
- Fig. 5: eine Variante eines elektronischen Anzeigebildes für den personifizierten elektronischen Informations- und/oder Diensteaufruf,
- Fig. 6: ein Beispiel für einen personifizierten elektronischen Informations- und/oder Diensteabruf,
- Fig. 7: ein elektronisch aufbaubares Anzeigebild für das Einstiegsmenü eines virtuellen Marktplatzes an einer dezentralen Terminaleinrichtung.

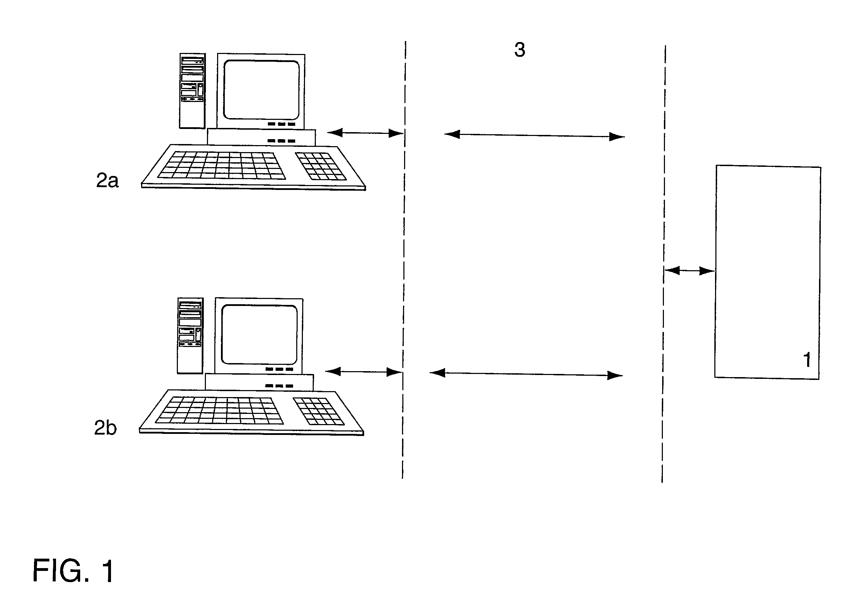

Die in Fig.1 dargestellten dezentralen elektronischen Terminaleinrichtungen 2a,2b können sowohl PCs im persönlichen Bereich eines Kunden oder Benutzers als auch fest installierte elektronische Terminaleinrichtungen in öffentlichen Einrichtungen, wie Kundenzentren, Informationsstellen oder anderen Orten sein. Über ein Kommunikationsnetzwerk 3, heute ist dies vorzugsweise das Internet können von den einzelnen Terminaleinrichtungen 2a,2b zeitweise oder dauernd Kommunikationsverbindungen zu einer zentralen Einrichtung 1 elektronisch aufgebaut werden, so dass im elektronischen Dialog zwischen einer der dezentralen Terminaleinrichtungen und der zentralen Einrichtung Informationen, Daten und/oder Dienste zum Beispiel automatisiert abgerufen, angefordert, ausgetauscht und/oder generiert werden können. Die zentrale Einrichtung 1, die ein System zur Wirtschaftsförderung und/oder Firmengründung elektronisch verwaltet, kann außerdem mit verschiedenen nicht dargestellten elektronischen Einrichtungen angeschlossener Unternehmen oder anderer Partner in elektronischer Kommunikationsverbindung stehen und/oder hat die Möglichkeit, mit diesen Unternehmen und/oder Partnern eine elektronische Kommunikationsverbindung automatisch aufzubauen und Informationen oder Daten von den Servern dieser Partner automatisiert abzurufen. Dabei kann die zentrale Einrichtung 1 aus einer Anzahl mehrerer elektronischer Teileinrichtungen bestehen die funktionsmäßig zu einer zentralen elektronischen Einrichtung zusammengefaßt sind. Weiterhin besteht auch die Möglichkeit, dass die Kommunikation zwischen der zentralen Einrichtung 1 und einzelnen dezentralen elektronischen Terminaleinrichtungen 2a,2b und/oder angeschlossenen Unternehmen oder Partnern über eine feste oder stehende Kommunikationsverbindung erfolgt. Entsprechende Techniken sind heute allgemein bekannt.

Die zentrale elektronische Einrichtung 1 übernimmt neben der elektronischen Programmverwaltung und dem automatisierten Informationsaustausch auch die Aufgabe der elektronischen Informations- und Datenspeicherung. Die abgespeicherten Informationen und Daten werden in Zeitabständen oder bei einer Änderung der Informationen und/oder Daten aktualisiert.

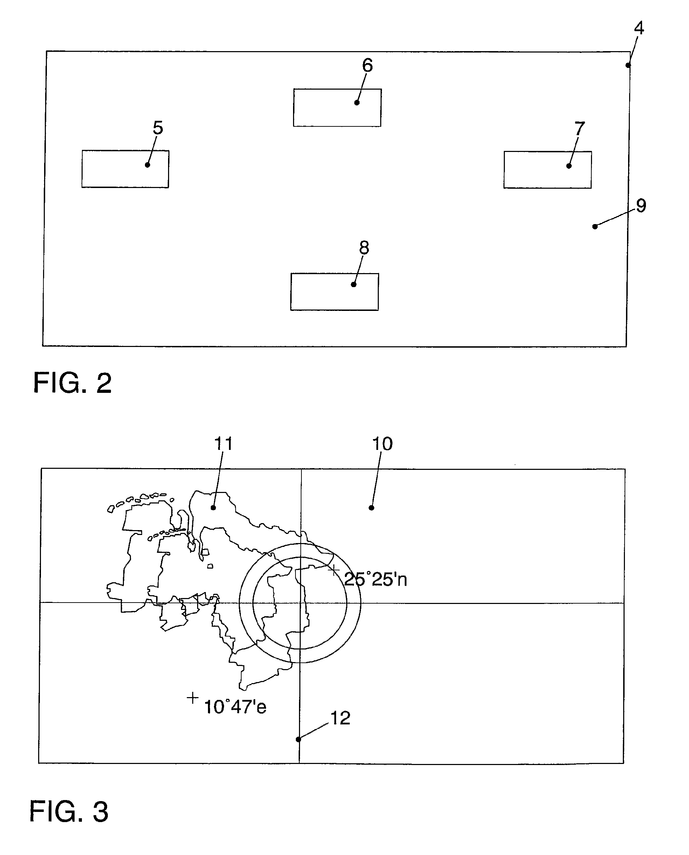

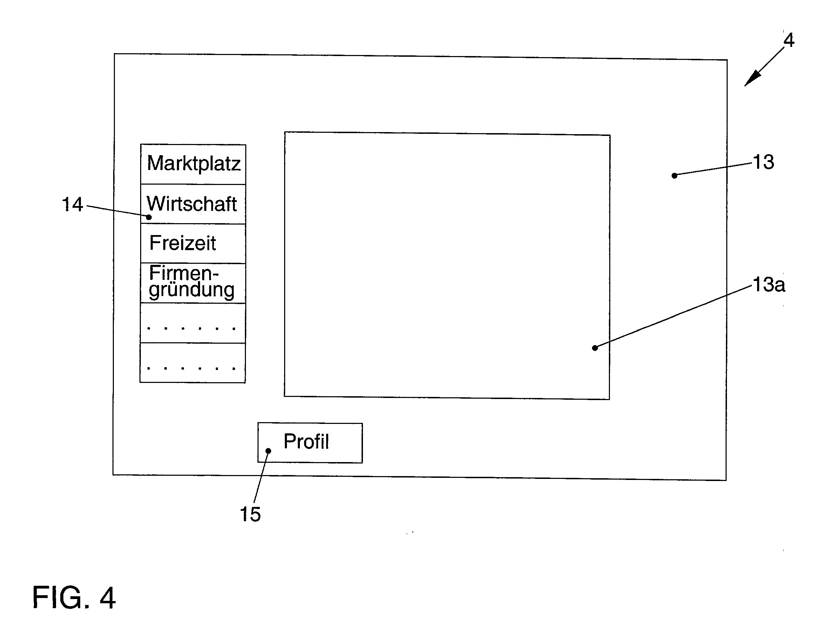

Anhand der Fig. 2 bis 7 wird das erfindungsgemäße System zur Wirtschaftsförderung und/oder Firmengründung in definierten territorialen Gebieten näher beschrieben. Nach dem Verbindungs- bzw. Kommunikationsaufbau zwischen der zentralen elektronischen Einrichtung 1 und beispielsweise der dezentralen elektronischen Terminaleinrichtung 2a erscheint auf der elektronischen Anzeigeeinrichtung 4 der dezentralen Terminaleinrichtung 2a ein Einstiegs- oder Hauptmenü 9, innerhalb dessen der Benutzer mit Hilfe eines Cursors oder eines Touchscreens verschiedene Untermenüs- und/oder Funktionen an Hand der Auswahlelemente 5-8 elektronisch auswählen kann. Dies können beispielsweise allgemeine Informationsangebote, ein eingerichtetes personifiziertes Informations- und/oder Diensteangebot, ein Kontaktforum oder eine elektronische Auswahlfunktion für ein territoriales Gebiet sein. Wird vom Benutzer das Auswahlelement 5 für die Auswahlfunktion des territorialen Gebietes angewählt, erscheint auf der elektronischen Anzeigeeinrichtung ein Anzeigebild 10, wie es in Fig. 3 dargestellt ist. Hier ist eine Landkarte 11 bzw. ein Teil einer Landkarte gezeigt. Im Ausführungsbeispiel kann der Benutzer über ein dargestelltes und in seiner Position auf der Anzeigeeinrichtung über eine elektronische Bedienfunktion veränderbares Fadenkreuz 12 elektronisch auswählen. Dabei kann eine elektronische Auswahlmöglichkeit für die Größe des territorialen Gebietes vorgesehen sein, beispielsweise ob eine Stadt, ein Landkreis, ein Bundesland oder ein Staat ausgewählt werden soll. Über eine sogenannte Enterfunktion erscheint auf der elektronischen Anzeigeeinrichtung 4 ein Hauptmenü 13 für das ausgewählte Gebiet, wobei das Informations- und/oder Diensteangebot gebietsausgerichtet gestaltet sein kann. In Fig. 4 ist ein beispielhaftes gebietsbezogenes Hauptmenü 13 gezeigt. Auch hier sind wiederum Auswahlelemente 14 für allgemeine Themengebiete, die allgemein interessierende Informationen und Dienste betreffen, sowie ein Anzeigefeld 13a elektronisch dargestellt. Diese Hauptthemen betreffen insbesondere solche gebietsrelevanten Informationen und Dienste, die für Gewerbetreibende oder Firmengründer interessant sind, beispielsweise kann ein Hauptthemengebiet lauten: "Firmengründung in diesem Gebiet". Unter diesem Haupthemengebiet findet der Benutzer automatisiert handlungs- und prozeßorientiert Hilfestellungen für eine Firmengründung. Dabei ist erfindungsgemäß vorgesehen, über die zentrale Einrichtung 1 nicht nur Informationen, sondern auch prozeßorientiert Hilfestellungen automatisiert anzubieten. Wenn es beispielsweise um die Registrierung der Firma geht, findet der Benutzer unter diesem Themengebiet nicht nur die entsprechenden Formblätter, die er über die zentrale Einrichtung 1 an die zuständige Stelle elektronisch und per Menüführung versenden kann. Auf der dezentralen Terminaleinrichtung 2a werden zusätzlich Öffnungszeiten der entsprechenden Stellen automatisiert angezeigt und vielleicht angeboten eine Verbindung mit einem zuständigen Bearbeiter automatisiert herzustellen. Hier sind die unterschiedlichsten Informations- und Dienstangebote, bezogen und zusammengefaßt auf die jeweilig durchzuführenden Handlungs- und Verfahrensschritte denkbar. Das Ausführungsbeispiel erklärt nur anhand diese Beispiels den grundsätzlichen automatisierten Informations- und/oder Diensteaufbaus.

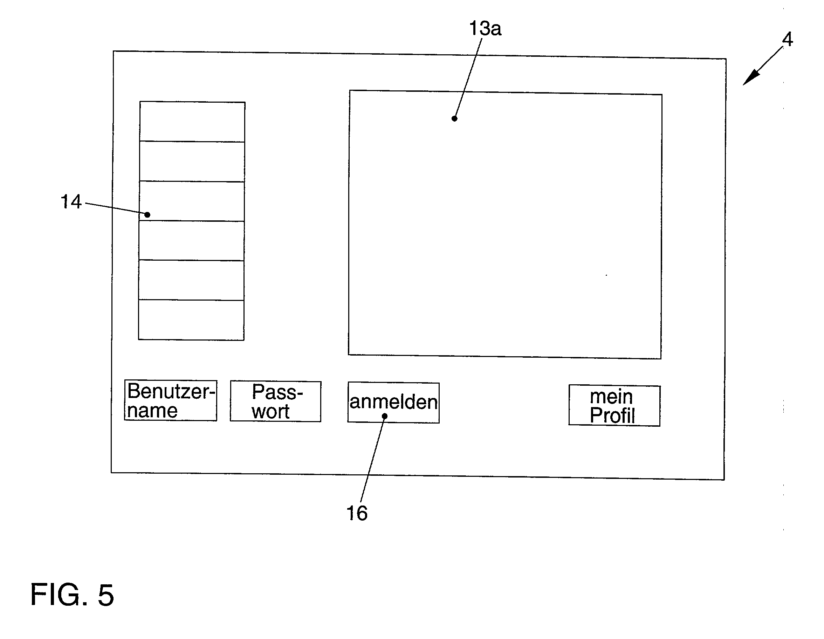

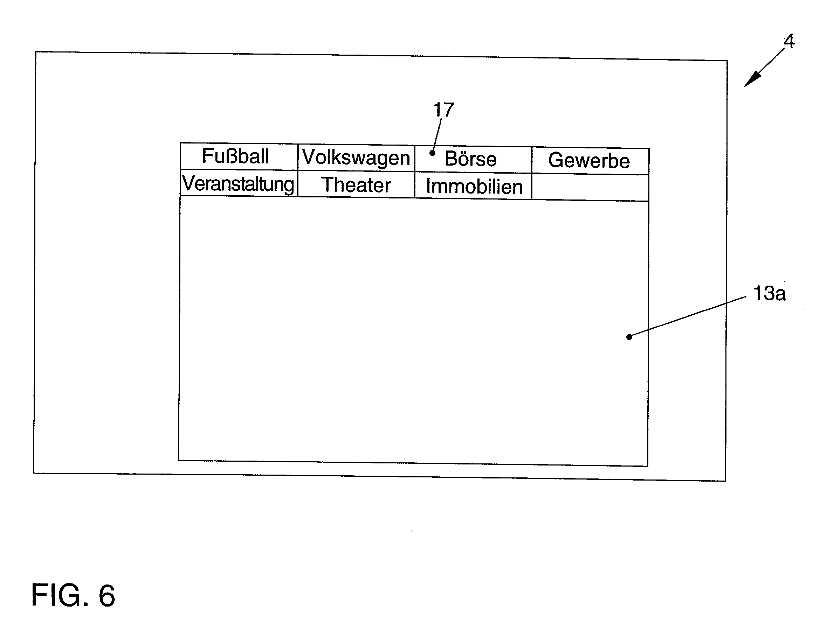

Zusätzlich zeigt das Einstiegsmenü 13 auf der elektronischen Anzeigeeinrichtung 4 ein Auswahlelement 15 zu einem personifizierten Informations- und/oder Diensteabruf. Dieser Menüpunkt kann sowohl gebietsbezogen als auch direkt im Einstiegsmenü 9 (Fig.2) vorgesehen sein. Beim erstmaligen Anwählen dieses Menüpunktes wird der Benutzer über die Anzeigeeinrichtung 4 und ein Auswahlelement 16 (Fig.5) automatisch aufgefordert, sich anzumelden und ein Kennwort für seinen persönlichen Informations- und Diensteabruf elektronisch anzugeben, das bezogen auf den personifizierten Abruf in der zentralen elektronischen Einrichtung 1 abgespeichert wird. Verfahren zur Anmeldung zu definierten Diensten und Informationsabrufen sind allgemein bekannt. Danach besteht für den Benutzer die Möglichkeit, seinen speziellen und nach seinen Wünschen zusammengestellten Dienstabruf zu programmieren, über den speziell von ihm gewünschte Informationen- und/oder Dienste direkt, beispielsweise über Auswahlelemente 17, automatisert angewählt werden können. Ein Beispiel eines solchen personifizierten Informations- und/oder Diensteabrufs (profilierte Themenschwerpunkte) mit einem Anzeigefeld 13a ist in Fig. 6 gezeigt. Es besteht hier die Möglichkeit, weitere Themenschwerpunkte jederzeit elektronisch aufzunehmen oder zu löschen. Der Benutzer kann beim Menüeinstieg zusätzlich automatisch darauf aufmerksam gemacht werden, wenn sich zu bestimmten Themenschwerpunkten Informationsänderungen ergeben haben, so dass er gegebenenfalls nur die Themenschwerpunkte mit Informationsänderungen anwählen muß.

Des weiteren kann im Einstiegsmenü 9 (Fig.2) oder auch im gebietsabhängigen Menüpunkt 13 (Fig. 4) ein Auswahlelement 14 für ein Kontaktforum oder Expertenforum auf der elektronischen Anzeigeeinrichtung 4 angezeigt werden. Innerhalb dieses Kontaktforums sind Informationen über Ansprechpartner zu bestimmten Haupt- und Unterthemenkreisen gespeichert und über die dezentralen Terminaleinrichtungen 2a,2b elektronisch abrufbar. Möchte beispielsweise ein Nutzer in einem bestimmten territorialen Gebiet, beispielsweise in einem Staat, eine Firma gründen und sucht ein Grundstück oder möchte etwas über die Rahmenbedingungen wissen oder anderweitige Unterstützung erhalten, besteht die Möglichkeit, über ein Suchschema dieses Menüpunktes Informationen über entsprechende Ansprechpartner automatisiert zu erhalten. Zusätzlich kann die Möglichkeit vorgesehen sein, mit dem Ansprechpartner oder weiteren Ansprechpartnern über die zentrale elektronische Einrichtung mit dem Ansprechpartner in Kontakt zu treten.

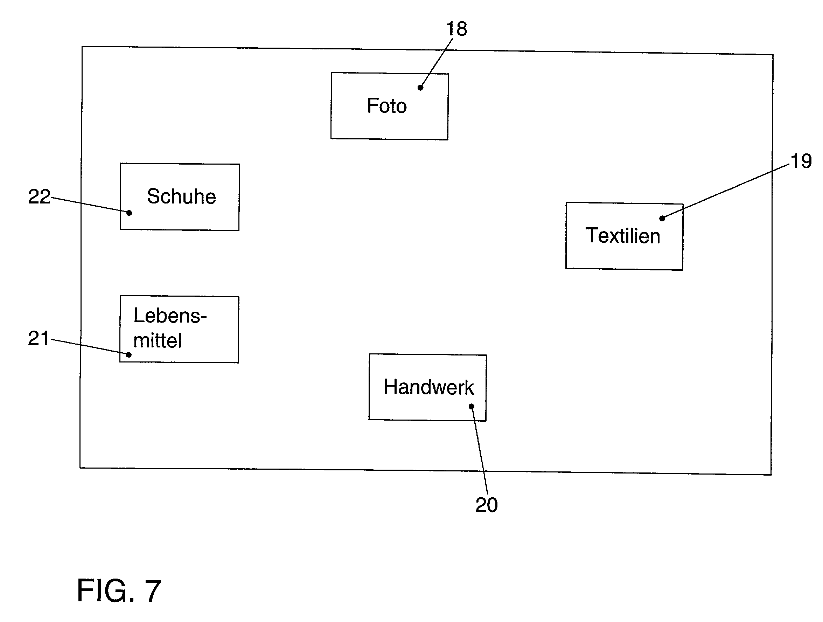

Ein weiterer gebietsabhängiger Dienst zur Wirtschaftsförderung kann außerdem ein virtueller Marktplatz sein, dessen Menüstruktur über ein Auswahlelement 14 auf der Anzeigeeinrichtung 4 im gebietsabhängigen Menüpunkt 13 (Fig.4) elektronisch aufgerufen werden kann. Wird das Auswahlelement 14 betätigt, erscheint beispielsweise automatisch auf der Anzeigeeinrichtung 4 eine Menüstruktur mit verschiedenen Auswahlelementen 18-22, wie sie in Fig. 7 gezeigt ist. Jedes der angezeigten Auswahlelemente steht für eine bestimmte Warengruppe, beispielsweise kann der Benutzer über das Auswahlelement 22 die Warengruppe "Schuhe" anwählen. In weiteren nicht dargestellten Untermenüs kann diese Warengruppe über Auswahlelemente eventuell weiter spezifiziert werden. Innerhalb eines angezeigten Untermenüs erhält der Benutzer dann die benötigten Informationen zum Kauf von den gewünschten Waren, wobei die in Warengruppen geordneten Waren der am virtuellen Marktplatz beteiligten Unternehmen elektronisch angeboten werden und vom Benutzer der dezentralen Terminaleinrichtung 2a elektronisch bestellt und gemeinschaftlich bezahlt werden können. Der Vorteil des erfindungsgemäßen Marktplatzes besteht zum einen darin, dass den beteiligten Firmen die Möglichkeit gegeben wird, ihre Waren und/oder Dienstleistungen gemeinschaftlich elektronisch anzubieten und zu verkaufen. Zum anderen bietet der Marktplatz dem Kunden eine einheitliche Menüstruktur zum elektronischen Kauf oder der Bestellung von Waren und/oder Dienstleistungen an, die es ihm nicht nur ermöglicht, Waren und/oder Dienstleistungen aller angeschlossenen Unternehmen elektronisch zu ordern. Er kann sich auch auf einfache Weise über eine einheitliche Menüstruktur einen Überblick über das vorhandene Warensortiment, die Lieferbedingungen und die Preise verschaffen. Außerdem erlaubt der virtuelle Marktplatz einen direkten Preisvergleich für die selben Waren, die jedoch von unterschiedlichen Unternehmen angeboten werden. Zusätzlich kann jeder Ware elektronisch eine Information zugeordnet sein, welches Unternehmen die Ware anbietet.

### BEZUGSZEICHENLISTE

- 1: zentrale Einrichtung
- 2a,2b: dezentrale Terminaleinrichtungen
- 3: Kommunikationsnetzwerk
- 4: Anzeigeeinrichtung
- 5-8: Auswahlelemente
- 9: Einstiegs- und Hauptmenü
- 10: Anzeigebild
- 11: Landkarte
- 12: Fadenkreuz
- 13: gebietsbezogenes Hauptmenü
- 13a: Anzeigefeld
- 14: Auswahlelemente
- 15: Auswahlelement für den personifizierten Informations- und/oder Diensteabruf
- 16: Auswahlelement
- 17: Auswahlelemente für Themenschwerpunkte
- 18-22: Auswahlelemente für Waren- und Dienstleistungsgruppen des virtuellen Marktplatzes

## Patentansprüche

1. Elektronisches Verfahren zur Wirtschaftsförderung und/oder Firmengründung in definierten territorialen Gebieten, **dadurch gekennzeichnet, dass** in einer zentralen elektronischen Einrichtung (1) eines Datenkommunikationsnetzwerkes (3) Dienste und damit verbundene Menüstrukturen zur Wirtschaftsförderung und/oder prozeßorientierte Informationen zur Wirtschaftsförderung der territorialen Gebiete elektronisch abgelegt sind und über das Datenkommunikationsnetzwerk (3) von dezentralen elektronischen Terminaleinrichtungen (2a,2b) elektronisch abgerufen werden.

2. Verfahren nach Anspruch 1, **dadurch gekennzeichnet, dass** der elektronische Abruf der Dienste und/oder der prozeßorientierten Informationen mittels einer Menüauswahl durch Vorgabe in einem Suchschema und/oder durch Vorgabe einzelner Dienste und/oder Informationen und/oder einzelner Themengebiete und/oder durch Vorgabe einzelner territorialer Gebiete strukturiert ist.

3. Verfahren nach Anspruch 1 oder 2, **dadurch gekennzeichnet, dass** die territorialen Gebiete über die dezentralen elektronischen Terminaleinrichtungen (2a,2b) über eingebbare Gebietebezeichnungen und/oder ein von der zentralen Einrichtung (1) elektronisch abrufbares und auf einer Anzeigeeinrichtung (4) der dezentralen Terminaleinrichtung (2a,2b) elektronisch darstellbares geographische Gebiet, insbesondere über eine Landkarte (11) oder einen Teil einer Landkarte, und eine Anwahl des territorialen Gebietes auf der Darstellung des geographischen Gebietes elektronisch auswählbar sind.

4. Verfahren nach einem der Ansprüche 1 bis 3, **dadurch gekennzeichnet, dass** die territorialen Gebiete über eine elektronische Positionsbestimmung der dezentralen Terminaleinrichtung (2a, 2b) oder durch eine Standorteingabe über die dezentralen Terminaleinrichtungen automatisiert auswählbar sind.

5. Verfahren nach einem der Ansprüche 1 bis 4, **dadurch gekennzeichnet, dass** nach der elektronischen Auswahl eines gewünschten territorialen Gebietes an der dezentralen Terminaleinrichtung (2a,2b) von der zentralen elektronischen Einrichtung (1) für das gewünschte territoriale Gebiet abgelegte prozeßorientierte Informationen und/oder Dienste elektronisch abgerufen und in einer Menüstruktur Haupt- und/oder Unterthemenkreise auf der Anzeigeeinrichtung (4) der abrufenden dezentralen Terminaleinrichtung (2a,2b) automatisiert dargestellt werden.

6. Verfahren nach Anspruch 5, **dadurch gekennzeichnet, dass** die Haupt- und/oder Unterthemenkreise Informationen und/oder Dienste zur Wirtschaftsförderung und/oder Firmengründung beinhalten.

7. Verfahren nach einem der Ansprüche 1 bis 6, **dadurch gekennzeichnet, dass** über eine mit der zentralen elektronischen Einrichtung (1) in Kommunikationsverbindung stehenden dezentralen elektronischen Terminaleinrichtung (2a,2b) ein personifizierter Informations- und/oder Diensteabruf in der zentralen Einrichtung (1) programmierbar ist und/oder automatisiert abrufbar ist.

8. Verfahren nach Anspruch 7, **dadurch gekennzeichnet, dass** auf der elektronischen Anzeigeeinrichtung (4) einer der mit der zentralen Einrichtung (1) über das Datenkommunikationsnetzwerk (3) in Kommunikationsverbindung stehenden dezentralen Einrichtung (2a,2b) ein Auswahlelement (15) zum personifizierten Informations- und/oder Diensteabruf von der zentralen Einrichtung (1) automatisiert dargestellt ist, über welches ein personifizierter Informations- und/oder Diensteabruf programmierbar ist und in der zentralen Einrichtung (1) elektronisch abspeicherbar ist und in Abhängigkeit der Programmierung bei wiederholter Anwahl des personifizierten Informations- und Diensteabrufs, insbesondere über das Auswahlelement, Informationen und/oder Dienste des personifizierten Abrufs auf der Anzeigeeinrichtung (4) einer dezentralen Terminaleinrichtung (2a,2b) automatisiert dargestellt werden.

9. Verfahren nach Anspruch 7 oder 8, **dadurch gekennzeichnet, dass** vor oder während der Programmierung des personifizierten Informations- und/oder Diensteabrufs der zentralen Einrichtung (1) über die dezentrale Terminaleinrichtung (2a,2b) ein Code elektronisch mitgeteilt wird, über den die Informationen und/oder Dienste des personifizierten Abrufs automatisiert aufrufbar sind.

10. Verfahren nach Anspruch 9, **dadurch gekennzeichnet, dass** innerhalb der auf der elektronischen Anzeigeeinrichtung dargestellten und/oder darstellbaren Menüstruktur zumindest eine Mitteilung über eine Änderung des Informations- und/oder Diensteabrufs automatisch dargestellt wird.

11. Verfahren nach einem der Ansprüche 7 bis 10, **dadurch gekennzeichnet, dass** der zentralen Einrichtung (1), vorzugsweise innerhalb des Menüs des personifizierten Informations- und/oder Diensteaufrufs, von einer der dezentralen Terminaleinrichtungen (2a,2b) eine elektronische Postadresse elektronisch mitteilbar ist, wobei bei einer Informations- und/oder Diensteänderung des personifizierten Informations- und/oder Diensteabrufs und/oder in definierten Abständen eine Mitteilung über die Informations- und/oder Diensteänderung und/oder die Informationsänderung von der zentralen Einrichtung (1) automatisch an die mitgeteilte elektronische Postadresse gesendet wird.

12. Verfahren nach einem der vorstehenden Ansprüche 1 bis 11, **dadurch gekennzeichnet, dass** einer der angebotenen Dienste zur Wirtschaftsförderung Informationen über Ansprechpartner zu definierten Themenkreisen, insbesondere zur Firmengründung sind, die in der zentralen Einrichtung (1)elektronisch abgespeichert sind und über die dezentralen Terminaleinrichtungen (2a,2b) elektronisch abrufbar sind.

13. Verfahren nach Anspruch 12, **dadurch gekennzeichnet, dass** eine Kommunikation der Benutzer einer dezentralen Termineinrichtung (2a,2b) über die zentrale Einrichtung (1) mit einem oder mehreren Ansprechpartnern automatisiert herstellbar ist.

14. Verfahren nach einem der vorstehenden Ansprüche dass einer der elektronischen Dienste zur Wirtschaftsförderung ein virtueller Marktplatz verschiedener Unternehmen, insbesondere eines territorialen Gebietes, ist, der von der zentralen elektronischen Einrichtung (1) automatisiert organisiert wird und über den von den dezentralen elektronischen Terminaleinrichtungen (2a,2b) Waren und/oder Dienstleistungen der angeschlossenen Unternehmen gesammelt elektronisch bestellbar sind.

15. Verfahren nach Anspruch 14, **dadurch gekennzeichnet, dass** über die zentrale Einrichtung (1) die Auslieferung der bestellten Waren und/oder die Durchführung der Dienstleistungen automatisiert organisiert wird.

16. Verfahren nach Anspruch 14 oder 15, **dadurch gekennzeichnet, dass** bei einer verbindlichen Bestellung einer Ware durch eine dezentrale Terminaleinrichtung (2a,2b) von der zentralen elektronischen Einrichtung (1) an das die Ware anbietende Unternehmen eine elektronische Aufforderung zur Auslieferung an den Kunden oder eine zentrale Ausgabestelle sendbar ist.

17. Verfahren nach einem der Ansprüche 14 bis 16, **dadurch gekennzeichnet, dass** über die zentrale elektronische Einrichtung (1) die Bezahlung der bestellten Waren und/oder Dienstleistungen und/oder der ausgelieferten Waren und/oder durchgeführten Dienstleistungen durchgeführt wird.

18. Zentrale elektronische Einrichtung in einem Datenkommunikationsnetzwerk, von der Informationen und/oder Dienste zur Wirtschaftsförderung und/oder Firmengründung über dezentrale elektronische Terminaleinrichtungen (2a,2b) elektronisch abrufbar sind, **dadurch gekennzeichnet, dass** die zentrale elektronische Einrichtung (1) derart ausgebildet ist, dass zumindest ein Teil der Informationen in Bezug auf ein territoriales Gebiet automatisiert abrufbar und/oder ein Teil der Dienste in Bezug auf ein territoriales Gebiet in der zentralen Einrichtung (1) elektronisch organisiert ist.

19. Einrichtung nach Anspruch 18, **dadurch gekennzeichnet, dass** die zentrale Einrichtung (1) derart aufgebaut ist, dass der Abruf der Dienste und/oder der prozeßorientierten Informationen über eine mit der zentralen Einrichtung (1) in Kommunikationsverbindung stehenden dezentralen Terminaleinrichtung (2a,2b) mittels einer Menüauswahl durch Vorgabe in einem Suchschema und/oder durch elektronische Vorgabe einzelner Dienste und/oder Informationen und/oder einzelner Themengebiete und/oder durch Vorgabe einzelner territorialer Gebiete strukturiert ist.

20. Einrichtung nach Anspruch 18 oder 19, **dadurch gekennzeichnet, dass** die zentrale Einrichtung (1) derart ausgebildet ist, dass die territorialen Gebiete über die dezentralen Terminaleinrichtungen (2a,2b) über Gebietebezeichnungen und/oder Gebietecodes und/oder ein von der zentralen Einrichtung (1) abrufbares und auf einer elektronischen Anzeigeeinrichtung (4) der mit der zentralen Einrichtung (1) in Kommunikationsverbindung stehenden dezentralen Terminaleinrichtung (2a,2b) darstellbares geographische Gebiet, insbesondere über eine Landkarte (11) oder einen Teil einer Landkarte, und eine Anwahl des territorialen Gebietes auf dem dargestellten geographischen Gebiet elektronisch auswählbar sind.

21. Einrichtung nach Anspruch 20, **dadurch gekennzeichnet, dass** die zentrale Einrichtung (1) derart ausgebildet ist, dass die territorialen Gebiete über eine automatisiertePositionsbestimmung der eine Positionsbestimmungseinrichtung aufweisenden dezentralen Terminaleinrichtungen (2a,2b) und/oder durch eine Standorteingabe über die dezentralen Terminaleinrichtungen (2a,2b) elektronisch auswählbar ist.

22. Einrichtung nach Anspruch 20 oder 21, **dadurch gekennzeichnet, dass** die zentrale Einrichtung (1) derart ausgebildet ist, dass nach der elektronischen Auswahl eines gewünschten territorialen Gebietes über eine der dezentralen Terminaleinrichtungen (2a,2b) von der zentralen Einrichtung (1) für das gewünschte territoriale Gebiet abgelegte prozeßorientierte Informationen automatisiert abgerufen und in einer Menüstruktur Haupt- und/oder Unterthemenkreise auf der elektronischen Anzeigeeinrichtung (4) der abrufenden dezentralen Terminaleinrichtung (2a,2b) darstellbar sind.

23. Einrichtung nach Anspruch 22, **dadurch gekennzeichnet, dass** die Haupt- und/oder Unterthemenkreise Informationen und/oder Dienste der Wirtschaftsförderung und/oder Firmengründung beinhalten.

24. Einrichtung nach einem der Ansprüche 18 bis 23, **dadurch gekennzeichnet, dass** die zentrale Einrichtung (1) derart ausgebildet ist, dass über eine mit der zentralen Einrichtung (1) in Kommunikationsverbindung stehenden dezentralen Terminaleinrichtung (2a,2b) in der zentralen Einrichtung (1) ein personifizierter Informations- und/oder Diensteabruf elektronisch programmierbar und/oder automatisiert aufrufbar ist.

25. Einrichtung nach Anspruch 24, **dadurch gekennzeichnet, dass** die zentrale Einrichtung (1) derart ausgebildet ist, dass auf der elektronischen Anzeigeeinrichtung (4) einer mit der zentralen Einrichtung (1) über das Datenkommunikationsnetzwerk (3) in Kommunikationsverbindung stehenden dezentralen Einrichtung (2a,2b) ein Auswahlelement (15) zum personifizierten Informations- und/oder Diensteabruf von der zentralen Einrichtung (1) darstellbar ist, über welches ein personifizierter Informations- und/oder Diensteabruf programmierbar und in der zentralen Einrichtung (1) elektronisch abspeicherbar ist und in Abhängigkeit der Programmierung bei wiederholter Anwahl des personifizierten Informations- und Diensteabrufs, insbesondere über das Auswahlelement, Informationen und/oder Dienste des personifizierten Abrufs auf der Anzeigeeinrichtung (4) einer dezentralen Terminaleinrichtung (2a,2b) darstellbar sind.

26. Verfahren nach Anspruch 24 oder 25, **dadurch gekennzeichnet, dass** die zentrale Einrichtung (1) derart ausgebildet ist, dass vor oder während der Programmierung des personifizierten Informations- und/oder Diensteabrufs der zentralen Einrichtung (1) über die dezentralen Terminaleinrichtungen (2a,2b) ein Code elektronisch mitgeteilt wird, über den die Informationen und/oder Dienste des personifizierten Abrufs in der zentralen Einrichtung (1) elektronisch organisiert sind und von den dezentralen Terminaleinrichtungen (2a,2b) aufrufbar sind.

27. Einrichtung nach einem der Ansprüche 24 bis 26, **dadurch gekennzeichnet, dass** die zentrale Einrichtung (1) derart ausgebildet ist, dass der zentralen Einrichtung (1), vorzugsweise innerhalb des Menüs des personifizierten Informations- und/oder Diensteaufrufs, von einer der dezentralen Terminaleinrichtungen (2a,2b) eine elektronische Postadresse elektronisch mitteilbar ist, wobei bei einer Informationsund/oder Diensteänderung des personifizierten Informations- und/oder Diensteabrufs und/oder in definierten Abständen eine Mitteilung über die Informations- und/oder Diensteänderung und/oder die Informationsänderung von der zentralen Einrichtung (1) an die mitgeteilte elektronische Postadresse automatisiert sendbar ist und/oder gesendet wird.

28. Einrichtung nach einem der Ansprüche 18 bis 27, **dadurch gekennzeichnet, dass** einer der angebotenen Dienste zur Wirtschaftsförderung Informationen von Ansprechpartnern zu definierten Themenkreisen, insbesondere zur Firmengründung, sind, die in der zentralen Einrichtung (1) elektronisch abgelegt sind und über die dezentralen Terminaleinrichtungen (2a,2b) elektronisch abrufbar sind.

29. Einrichtung nach Anspruch 28, **dadurch gekennzeichnet, dass** ein Kontaktaufbau und/oder eine Kommunikation der Benutzer einer dezentralen Terminaleinrichtung (2a,2b) über die zentrale Einrichtung (1) mit einem oder mehreren Ansprechpartnern elektronisch und automatisiert herstellbar ist.

30. Einrichtung nach einem der Ansprüche 18 bis 29, **dadurch gekennzeichnet, dass** einer der Dienste zur Wirtschaftsförderung ein virtueller Marktplatz verschiedener Unternehmen, insbesondere eines territorialen Gebietes, ist, der von der zentralen Einrichtung (1) derart elektronisch organisiert ist und über den von den dezentralen Terminaleinrichtungen (2a,2b) Waren und/oder Dienstleistungen aller angeschlossenen Unternehmen elektronisch, gemeinsam bestellbar sind.

31. Einrichtung nach Anspruch 30, **dadurch gekennzeichnet, dass** die zentrale Einrichtung (1) derart ausgebildet ist, dass über die zentrale Einrichtung (1) die Auslieferung der bestellten Waren und/oder die Durchführung der angeforderten Dienstleistungen elektronisch organisierbar ist.

32. Einrichtung nach Anspruch 30 oder 31, **dadurch gekennzeichnet, dass** die zentrale Einrichtung (1) derart ausgebildet ist, dass bei einer verbindlichen Bestellung einer Ware durch eine dezentrale Terminaleinrichtung (2a,2b) von der zentralen Einrichtung (1) an das die Ware anbietende Unternehmen eine Mitteilung zur Auslieferung an den Kunden oder eine zentrale Ausgabestelle automatisch sendbar ist.

33. Einrichtung nach einem der Ansprüche 30 bis 32, **dadurch gekennzeichnet, dass** die zentrale Einrichtung (1) derart ausgebildet ist, dass über die zentrale Einrichtung (1) die Bezahlung der bestellten Waren und/oder Dienstleistungen und/oder der ausgelieferten Waren und/oder durchgeführten Dienstleistungen erfolgt.

34. Programmprodukt, das direkt in einen internen Speicher der zentralen Einrichtung (1) ladbar ist und Programmabschnitte umfaßt, mit denen die Verfahrensschritte gemäß einem der Ansprüche 1 bis 17 ausgeführt werden und/oder ausführbar sind, wenn das Programmprodukt in der zentralen Einrichtung läuft.
